# EUROPEAN PATENT SPECIFICATION

(11) **EP 1 077 100 B1**
(45) Date of publication and mention of the grant of the patent: **23.02.2005**
(21) Application number: 00111861.1
(22) Date of filing: 08.06.2000
(51) Int. Cl.: B23C 5/10, B23C 5/20, B23C 5/22

(54) **Throwaway tip and cutting tool**
Schneideinsatz und Schneidwerkzeug
Plaquette et outil de coupe

(30) Priority: 17.08.1999 JP 23091699
(43) Date of publication of application: 21.02.2001
(73) Proprietor: MITSUBISHI MATERIALS CORPORATION, Chiyoda-ku, Tokyo (JP)
(72) Inventor: Nagaya, Hidehiko, c/o Tsukuba Plant, Ishige-machi, Yuuki-gun, Ibaraki-ken (JP); Shimomura, Hiroshi, c/o Tsukuba Plant, Ishige-machi, Yuuki-gun, Ibaraki-ken (JP)
(74) Representative: HOFFMANN - EITLE

(56) References cited:
- DE-A- 3 242 765
- DE-A- 3 725 154
- US-A- 3 226 797
- PATENT ABSTRACTS OF JAPAN vol. 1999, no. 02, 26 February 1999 (1999-02-26) & JP 10 291115 A (HITACHI TOOL ENG CO)
- PATENT ABSTRACTS OF JAPAN vol. 0101, no. 96 (M-497), 10 July 1986 (1986-07-10) & JP 61 038810 A (HONDA MOTOR CO), 24 February 1986 (1986-02-24)

## Description

### Detailed Description of the Invention

### Industrial Field of the Invention

The present invention relates to a throwaway tip (hereinafter, it may be referred to as tip) and to a throwaway-type cutting tool, such as an end mill, to which the throwaway tip is mounted.

The invention in particular relates to a throwaway tip according to the preamble of claim 1, as known from US-A-3226797.

### Description of the Related Art

Hitherto, in some throwaway-type end mills in which a plurality of, for example, two, parallelogram plate-like throwaway tips are mounted to the distal end of a tool body, and which are capable of performing a boring operation, one tip has been arranged so that a long cutting edge is defined as a front cutting edge and a short cutting edge is defined as an outer peripheral cutting edge, and the other tip has been arranged so that a short cutting edge is defined as a front cutting edge and a long cutting edge is defined as an outer peripheral cutting edge.

In this case, if the two tips have the same shape and size, they are conveniently administered or replaced. When such an end mill is used for a shoulder-cutting operation or a drilling operation with the outer peripheral cutting edges provided along the rotation axis of the tool body, for example, when the front cutting edge of one tip is provided so that an outer-peripheral-side corner cutting edge is projected at the distal end to gradually incline inward to an base end, the inner corner cutting edge of the front cutting edge of the other tip will project toward the distal end from the outer-peripheral-corner-side cutting edge, so that the front cutting edge is easily chipped at low speed.

In order to overcome such a drawback, when the front cutting edge of the other tip is arranged in a radial direction so as to prevent the inner corner cutting edge from projecting toward the distal end, since the outer peripheral cutting edge of the other tip is inclined inward from the outer peripheral cutting edge of one tip and does not serve as the outer peripheral cutting edge, the outer peripheral cutting edge performs cutting with a single edge of one tip so that the front cutting edge is easily chipped and cutting efficiency is low.

As an invention for improving such a defect, Japanese Unexamined Patent Application Publication No. 10-291115 discloses an end mill. In the end mill, two types of parallelogram plate-like tips, which are in line symmetry and are rotated in opposite, directions are used, a short cutting edge of one tip is used as a front cutting edge, and a long cutting edge of the other tip is used as a front cutting edge, thereby adopting an arrangement such that an outer-peripheral-corner-side cutting edge of each of the front cutting edges is projected toward the distal end from an inner corner cutting edge. This can perform a cutting operation using outer-peripheral-corner-side cutting edges as two cutting edges, and can improve cutting efficiency by restricting chipping of the outer-peripheral-corner-side cutting edges.

### Problems to be Solved by the Invention

In such an end mill, however, two types of tips having different outer shapes should be prepared, administration and replacement are complicated, running costs increase, and the cost of manufacturing the tip increases.

In consideration of these actual circumstances, it is an object of the present invention to provide a throwaway tip including a plurality of types of cutting edges capable of arranging different cutting edges thereon.

It is another object of the present invention to provide a cutting tool capable of projecting outer-peripheral-corner-side cutting edges toward the distal end thereof using one type of throwaway tip.

### Means for Solving the Problems

According to the present invention, there is provided a throwaway tip (1, 40) according to claim 1.

In a case where a plurality of such throwaway tips are used and provided at the distal end of a tool body so that the two corner cutting edges (10 and 12) on one side are located at the outer periphery of the distal end, if cutting edges on one side sandwiching the corner cutting edges (10 and 12) are provided as outer peripheral cutting edges along the rotation axis of the tool body, the other cutting edges sandwiching the corner cutting edges are inclines as front cutting edges from the outer periphery toward the inside, so that front cutting edges, outer peripheral cutting edges, and the outer-peripheral-side corner cutting edges can be arranged as two cutting edges. These cutting edges are difficult to chip and cutting efficiency is high, and the tips can be easily stored.

A corner angle of one of the two corner cutting edges (11 and 13) on the other side of the one surface may be set to 90° or less.

When the tip is mounted to the tool body, the thickness of the tool body at a peripheral portion of the tip can be ensured and the strength is high.

Two ridges on the other side in the one surface may be defined as cutting edges (6 and 7) which are not parallel to each other.

In this case, the thickness of the tool body at a peripheral portion of the tip can be also ensured and the strength is high.

Two pairs of opposing cutting edges (6, 7, 8, and 9) which are not parallel to each other may be inclined so that the distance between each of the cutting edges and a seating surface (2) opposing the one surface gradually changes from one end toward the other end.

The thickness of the back of a tip-mounting seat of the tool body can be increased according to the mounting posture of the tip to the tool body, or a large radial rake angle and a large axial rake angle can be set, and the cutting quality can be improved. The inclination angles of cutting edges and the distances between the cutting edges and the seating surface may be either different from one another or equal to one another in the opposing cutting edges of each pair.

According to the present invention, there is provided a throwaway-type cutting tool comprising a plurality of throwaway tips mounted to the distal end of a tool body, and each throwaway tip having a cutting edge arranged to project toward the distal end, wherein the plurality of throwaway tips (1 and 40) are the same as one another according to any one of Claims 1 to 4, and the two adjacent corner cutting edges (10 and 12) on one side in each of the plurality of throwaway tips are arranged to project toward the outer periphery of the distal end of the tool body.

If the two corner cutting edges (10 and 12) on one side are provided at the outer periphery of the distal end of the tool body, cutting can be started from the outer-peripheral-side corner cutting edges and chipping can be restricted when performing a drilling operation or the like, and when performing a shoulder-cutting operation or a groove-processing operation, a finishing operation can be performed by the corner cutting edges at the outer periphery of the distal end while performing the a shoulder-cutting operation by the outer peripheral cutting edges.

In a throwaway tip having one (12) of the corner cutting edges projected toward the outer periphery of the distal end of the tool body, a cutting edge (9) extending from the corner cutting edge (12) inward in a radial direction of the tool body may extend to the rotation axis of the tool body.

In performing the drilling operation and the like, a cutting operation can be securely performed without producing a core remainder.

Two cutting edges on one side of the throwaway tip which are not parallel to each other may be defined as long cutting edges (8 and 9), two cutting edges on the other side which are not parallel to each other may be defined as short cutting edges (6 and 7), a long cutting edge (9) in one (1A, 40A) of the plurality of throwaway tips (1, 40) projecting toward the distal end of the tool body may be defined as a front cutting edge and a short cutting edge (6) may be defined as an outer peripheral cutting edge, a short cutting edge (6) in the other one (1B, 40B) of throwaway tips may be defined as a front cutting edge and a long cutting edge (8) may be defined as an outer peripheral cutting edge, and these cutting edges may be provided at the distal end of the tool body.

When a plurality of the same tips are used, the corner cutting edges (10 and 12) on the outer periphery of the distal end of the tips can be arranged as two cutting edges by being projected toward the distal end, and the corner cutting edges are difficult to chip, the cutting efficiency is high, and the tips can be easily stored.

The same throwaway tips (1C, 1D, 40C, and 40D) defining long cutting edges (9 and 8) as outer peripheral cutting edges may be provided on the tool body at the distal end of the one throwaway tip so that rotation paths of outer peripheral cutting edges overlap when the tool body is rotated around the rotation axis.

The rotation paths of the outer peripheral cutting edges can be overlapped by sequentially overlapping the same tips from the distal end toward the base end of the tool body, and this can be adopted to a deep hole processing.

### Brief Description of the Drawings

Fig. 1 shows a throwaway tip according to a first embodiment of the present invention, in which: Fig. 1(a) is a plan view, Fig. 1(b) is a side view, as seen from the direction A, and Fig. 1(c) is a side view, as seen from the direction B.
Fig. 2 is a principal-part side view of an end mill to which two throwaway tips shown in Fig. 1 are mounted.
Fig. 3 is a front view of the end mill shown in Fig. 2.
Fig. 4 is a side view of the end mill shown in Fig. 2, as seen from the direction of an outer peripheral cutting edge.
Fig. 5 is a side view of an end mill according to a second embodiment of the present invention.
Fig. 6 is a side view of the end mill shown in Fig. 5, as seen from the direction C.
Fig. 7 is a side view of the end mill shown in Fig. 5, as seen from the direction D.
Fig. 8 shows a throwaway tip according to a third embodiment of the present invention, in which: Fig. 8(a) is a plan view, Fig. 8(b) is a side view of a tip shown in Fig. 8(a), as seen from the direction E, Fig. 8(c) is a side view of the same, as seen from the direction F, and Fig. 8(d) is a side view of the same, as seen from the direction G.
Fig. 9 is a front view of an end mill shown in Fig. 8 to which the throwaway tip shown in Fig. 8 is mounted.
Fig. 10 is a side view of the end mill shown in Fig. 8, as seen from the direction of one outer peripheral cutting edge.
Fig. 11 is a side view of the end mill shown in Fig. 8, as seen from the direction of the other outer peripheral cutting edge.
Fig. 12(a), Fig. 12(b), Fig. 12(c), and Fig. 12(d) are front views each showing another example of an end mill to which a throwaway tip is mounted.
Fig. 13 shows a throwaway tip according to a modification of the third embodiment, in which: Fig. 13(a) is a plan view,
Fig. 13(b) is a side view of a tip shown in Fig. 13(a), as seen from the direction H, Fig. 13(c) is a side view of the same, as seen from the direction I, Fig. 13(d) is a side view of the same, as seen from the direction J, and Fig. 13(e) is a side view of the same, as seen from the direction K.

### Description of the Embodiments

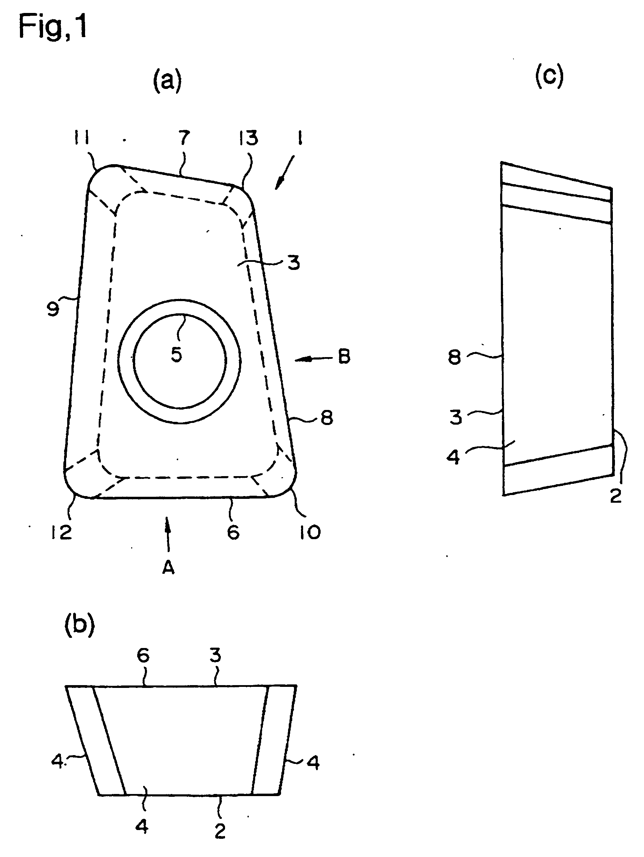

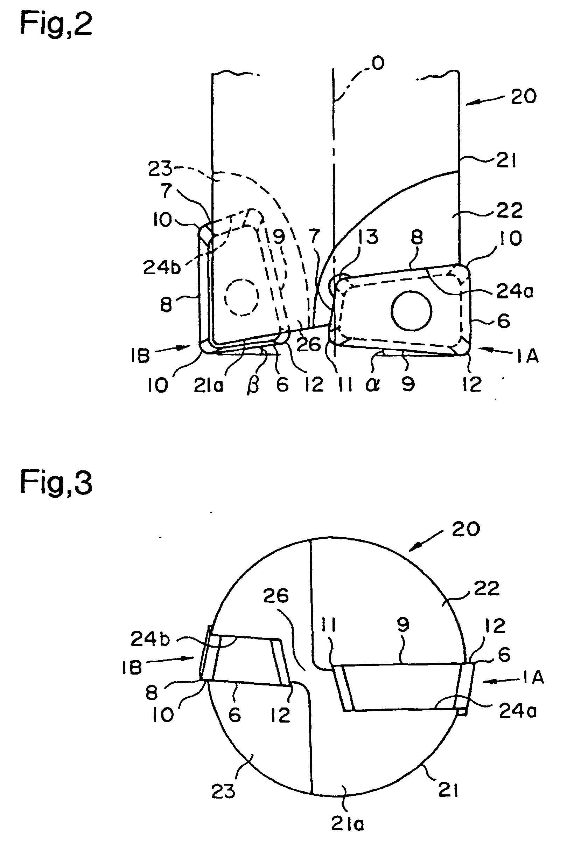

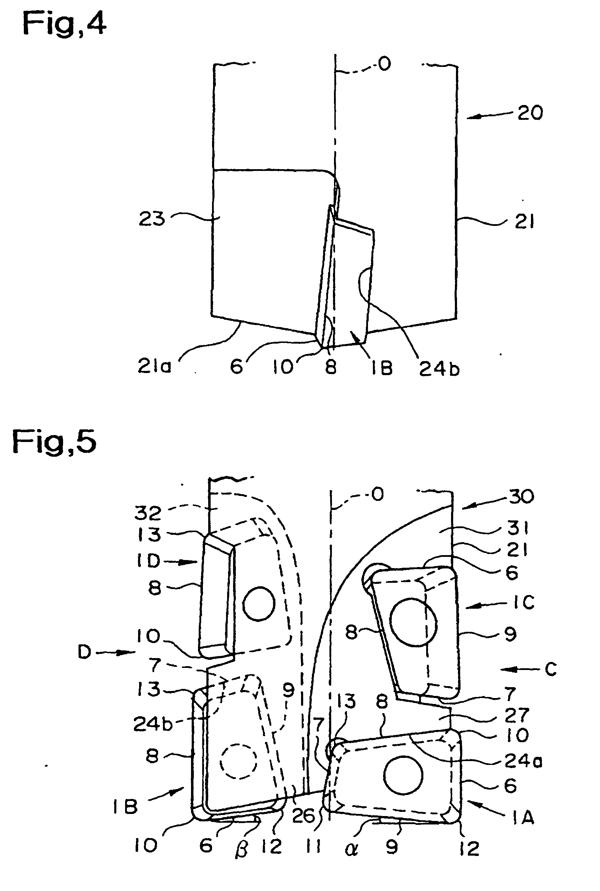

A throwaway tip and a throwaway-type end mill according to embodiments of the present invention will now be described with reference to accompanying drawings. Fig. 1 shows a throwaway tip according to a first embodiment, and Figs. 2 to 4 show a throwaway-type end mill according to the first embodiment. Fig. 1(a) is a plan view of the throwaway tip, Fig. 1(b) is a side view of the throwaway tip shown in Fig. 1(a), as seen from a direction A, Fig. 1(c) is a side view of the same, as seen from a direction B, Fig. 2 is a principal-part side view of the end mill to which the throwaway tip shown in Fig. 1 is mounted, Fig. 3 is a front view of the end mill shown in Fig. 2, and Fig. 4 is a principal-part side view of the end mill shown in Fig. 2, as seen from an outer peripheral cutting edge.

The throwaway tip (hereinafter, it may be referred to as tip) 1 according to the embodiment shown in Fig. 1 is formed in substantially the shape of a rectangular plate, includes an upper surface 3 provided so as to oppose a lower surface constituting a seating surface, and four side faces 4 gradually inclined outward with a positive inclination angle (relief angle) from the lower surface 2 to the upper surface 3, and is defined as a positive tip. The tip 1 is formed with a bolt-securing insertion hole 5 passing through central portions of the upper surface 3 and the lower surface 2.

The upper surface 3 and the lower surface 2 are formed in substantially the shape of a parallelogram plate. In four ridges of the upper surface 3, the opposing ridges of each pair are defined as short cutting edges and long cutting edges, one of two cutting edges constituting the short cutting edges is defined as a relatively-long first short cutting edge 6, and the other cutting edge is defined as a relatively-short second short cutting edge 7. The other two opposing sides constituting the long cutting edges are defined as, for example, a first long cutting edge 8 and a second long cutting edge 9 that are relatively longer than the first short cutting edge 6. Moreover, the opposing first short cutting edge 6 and the second short cutting edge 7 are not parallel to each other, and the other opposing first and second long cutting edges 8 and 9 are not parallel to each other. The upper surface 3 is defined as a rake face of each of the cutting edges 6, 7, 8, and 9, and each of the side faces 4 is defined as a relief face.

A first corner cutting edge 10 and a second corner cutting edge 11 in one diagonal direction of the upper surface 3 are formed by the intersecting first short cutting edge 6 and the first long cutting edge 8, and the intersecting second short cutting edge 7 and the second long cutting edge 9, respectively, and each of the corner angles is set to 90° or less, preferably, an acute angle, a corner angle of a third corner cutting edge 12 consisting of the first short cutting edge 6 and the second long cutting edge 9 in the other diagonal direction is set to 90°, and preferably, an acute angle, and a corner angle of a fourth corner cutting edge 13 consisting of the second short cutting edge 7 and the first long cutting edge 8 is set to an obtuse angle.

The corner angles of the first to third corner cutting edges 10, 11, and 12 may be either equal or unequal to one another.

The throwaway tip 1 of this embodiment is constructed as described above. An end mill 20 to which a plurality of throwaway tips 1 are mounted will now be described with reference to Figs. 2 to 4.

At the distal end of a tool body 21 of the end mill 20, two concave grooves 22 and 23 are provided, which substantially oppose each other with respect to the rotation axis O defining the center of rotation and which are cut out into substantially a fan-shape in cross section. The concave grooves 22 and 23 are formed by cutting out the tool body 21 from a longitudinal outer peripheral surface in the middle thereof toward a distal end surface 21a, a tip-mounting seat 24a is formed on a surface of one concave groove 22 facing a rotation direction, and a tip-mounting seat 24b is formed on a surface of the other concave groove 23 facing the rotation direction.

To one tip-mounting seat 24a, the above-described throwaway tip 1 is mounted with the second long cutting edge 9 defined as a front cutting edge and projected from the distal end surface 21a of the tool body 21 toward the distal end, and this tip is referred to as a main tip 1A. To the other tip-mounting seat 24b, the throwaway tip 1 is mounted with the first short cutting edge 6 defined as a front cutting edge and projected from the distal end surface 21a of the tool body 21 toward the distal end, and this tip is referred to as a sub-tip 1B.

A state in which the first and second long cutting edges 8 and 9 are arranged in a direction to intersect the rotation axis O, as in the main tip 1A, is referred to as a lateral arrangement, and a state in which the first and second long cutting edges 8 and 9 are arranged in a direction along the rotation axis O, as in the sub-tip 1B, is referred to as a vertical arrangement.

In the main tip 1A, since the third corner cutting edge 12 is provided outside the distal end, the first short cutting edge 6 is provided so that it projects along the outer peripheral surface of the tool body 21 to be substantially in parallel with the rotation axis O, and is defined as an outer peripheral cutting edge, the second long cutting edge 9 projecting from the distal end surface 21a of the tool body 21 toward the distal end is inclined at an angle α (for example, α = 5°) with respect to the line perpendicular to the rotation axis O so that it gradually comes close to the base end side from the outer periphery toward the rotation axis O, the second corner cutting edge 11 defining the acute angle of the other end of the second long cutting edge 9 is located on the opposite side of the rotation axis O, and the second short cutting edge 7 intersects the rotation axis O.

In the sub-tip 1B, since the first corner cutting edge 10 is provided outside the distal end, the first long cutting edge 8 is provided so that it projects along the outer peripheral surface of the tool body 21 to be substantially in parallel with the rotation axis O and is defined as an outer peripheral cutting edge, the first short cutting edge 6 projecting from the distal end face 21a of the tool body 21 toward the distal end is inclined at an angle β (for example, β = 7 to 10°, β = α is acceptable) so that it gradually comes close to the base end side from the outer periphery toward the rotation axis O, and the third corner cutting edge 13 of the other end is separated away from the rotation axis O.

For this reason, the second short cutting edge 7, the second long cutting edge 9, and side faces 4 and 4 thereof located inside both tips 1A and 1B are gradually inclined outward from the distal end toward the base end in the direction away from the rotation axis O.

The main tip 1A and the sub-tip 1B are mounted in such a manner that the first axial rake angle of the first short cutting edge 6 and the first long cutting edge 8 defining each of the outer peripheral cutting edges is a positive angle, as shown in Fig. 4 (only the first long cutting edge 8 is shown in Fig. 5). As shown in Fig. 2, the second long cutting edge 9 defining the front cutting edge of the main tip 1A is located on the radial line around the rotation axis O, a radial rake angle is set to 0°, the first short cutting edge 6 defining the front cutting edge of the sub-tip 1B is located above the center of rotation of the tool body, and a radial rake angle of is set to a negative angle.

Since the throwaway tip 1 and the end mill 20 according to this embodiment are constructed as described above, if a material to be cut is cut by rotating the tool body 21 around the rotation axis O, the corner cutting edges 12 and 10 on the outer periphery of the second long cutting edge 9 and the first short cutting edge 6 projecting at the distal end of the tool body 21 bite into the material to be cut. Since this area is rotated at high speed as compared with an area near the rotation axis O, cutting resistance during biting is low and a cutting operation can be performed without causing chipping. Furthermore, by feeding the tool body 21 to an end of the rotation axis O, a rotary cutting operation can be performed like a drill with the second long cutting edge 9 and the first short cutting edge 6 whose rotation paths overlap.

By feeding the tool body 21 in the lateral direction, outer peripheral cutting can be performed with the first short cutting edge 6 and the first long cutting edge 8 defining the outer peripheral cutting edges, and a finish cutting operation can be performed with the corner cutting edges 12 and 10 of the second long cutting edge 9 and the first short cutting edge 6. Alternatively, a shoulder-cutting operation or a groove-processing operation can be performed with the first short cutting edge 6 and the first long cutting edge 8 defining the outer peripheral cutting edges.

Even if the cutting edges of one of the tips 1A and 1B are chipped or worn, the same throwaway tips 1 may be replaced and mounted.

As described above, according to this embodiment, a plurality of the same tips 1 can be mounted to the tool body with different mounting angles and in different postures so that the second long cutting edge 9 and the first short cutting edge 6 can be arranged as front cutting edges, and the short cutting edge 6 and the long cutting edge 8 can be arranged as outer peripheral cutting edges, and only one type of replacement tip need be stored. Therefore, the cost of manufacturing the tips and the running costs of the cutting tool can be reduced.

Moreover, since the corner angle of at least the first and third corner cutting edges 10 and 12 on both sides of the first short cutting edge 6 is set to 90° or less, for example, an acute angle, the corner cutting edges 10 and 12 at an outer-peripheral-side of the distal end of the main tip 1A and the sub-tip 1B can be provided in a state of being projected greatest, and since the corner cutting edges 10 and 12 can be arranged as two cutting edges whose rotation paths overlap with restricting the chipping of the corner cutting edges 10 and 12, the cutting efficiency is high. In addition, the side faces 4 inside the main tip 1A and the sub tip 1B are gradually inclined from the distal end of the tool body 21 toward the base end in the direction away from the rotation axis O. Therefore, the thickness of a center portion 26 of the distal end of the tool body 21 sandwiched by the tips 1A and 1B can be increased and ensured, and the rigidity of the tool body 21 can be secured.

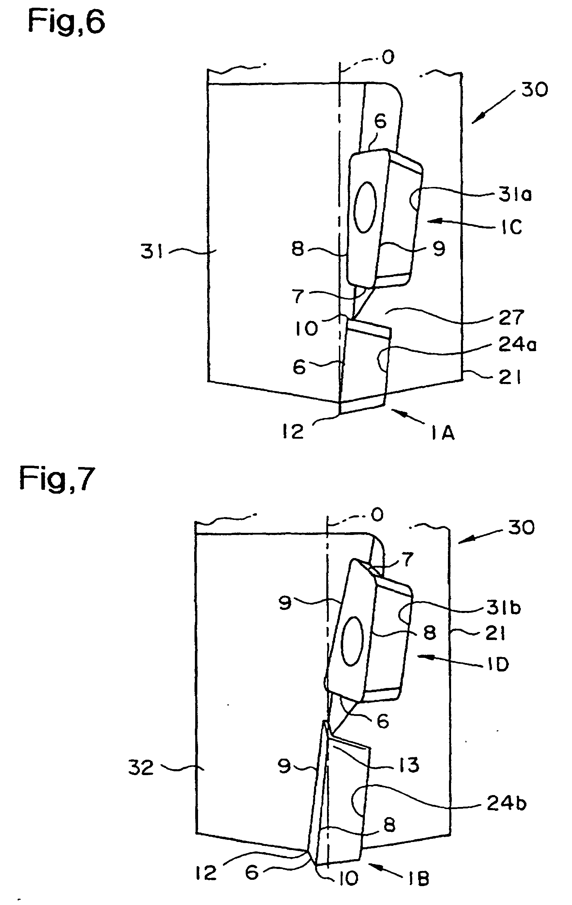

A second embodiment of the present invention will now be described with reference to Figs. 5 to 7. The same or similar portions to those of the above-described first embodiment are indicated by the same reference numerals and a description thereof will be omitted. Fig. 5 is a side view of a throwaway-type end mill according to the second embodiment, Fig. 6 is a side view of the end mill shown in Fig. 5, as viewed from the direction C, and Fig. 7 is a side view of the same, as viewed from the direction D.

A throwaway-type end mill 30 shown in Figs. 5 to 7 according to the second embodiment has the same construction as the throwaway-type end mill 20 according to the above-described first embodiment. At the distal end of a tool body 21, two concave grooves 31 and 32 are provided, which substantially oppose each other with respect to the rotation axis O defining the center of rotation and which are cut out into substantially a fan-shape in cross section. The concave grooves 31 and 32 have tip-mounting seats 24a and 24b formed on the distal end surfaces thereof facing a rotation direction, and a main tip 1A and a sub-tip 1B are attached thereto, respectively. The arrangement of the tips 1A and 1B is the same as the above-described first embodiment.

In one concave groove 31, a tip-mounting seat 31a is further formed at the base end side of the main tip 1A, and the above-described throwaway tip 1 is attached thereto as a third tip 1C. The third tip 1C is provided in such a manner that a second long cutting edge 9 is projected as an outer peripheral cutting edge from the outer peripheral surface of the tool body 21 to the outside in the radial direction so as to be located substantially in parallel with the rotation axis O, and a second short cutting edge 7 is directed to the distal end.

An axial rake angle of the second long cutting edge 9 is set to a positive angle, as shown in Fig. 6, and the second long cutting edge 9 is shifted toward the base end from a first long cutting edge 8 defining an outer peripheral cutting edge of the sub-tip 1B that is located on the opposite position across the rotation axis O of the tool body 21 so that its rotation path overlaps the rotation path of the first long cutting edge 8. Moreover, the first short cutting edge 6 of the main tip 1A and the second long cutting edge 9 of the third tip 1C each defining an outer peripheral cutting edge are twisted rearward in the rotation direction of the tool body 21 from the distal end toward the base end.

In the other concave groove 32, a tip-mounting seat 31b is further formed at the base end side of the sub-tip 1B, and the above-described throwaway tip 1 is attached thereto as a fourth tip 1D. The fourth tip 1D is provided in such a manner that the first long cutting edge 8 is projected as an outer peripheral cutting edge from the outer peripheral surface of the tool body 21 to the outside in the radial direction so as to be located substantially in parallel with the rotation axis O, and the first short cutting edge 6 is directed to the distal end.

An axial rake angle of the first long cutting edge 8 is set to a positive angle, as shown in Fig. 7, and the first long cutting edge 8 is shifted toward the base end from a second long cutting edge 9 defining an outer peripheral cutting edge of the third 1C that is located on the opposite position across the rotation axis O of the tool body 21 so that its rotation path overlaps the rotation path of the second long cutting edge 9. Moreover, the first long cutting edge 8 of the sub-tip 1B and the first long cutting edge 8 of the fourth tip 1D each defining an outer peripheral cutting edge are twisted rearward in the rotation direction of the tool body 21 from the distal end toward the base end.

According to the end mill 30 of the second embodiment, the main tip 1A located at the distal end of the tool body 21 is arranged in the vertical direction so that the first short cutting edge 6 defines an outer peripheral cutting edge, and the sub-tip 1B is arranged in the lateral direction so that the first long cutting edge 8 defines an outer peripheral cutting edge. Therefore, the third tip 1C and the fourth tip 1D can be arranged at the base end side of the main tip 1A and the sub-tip 1B so that the rotation paths of the outer peripheral cutting edges continue, and a deep hole processing can be performed. Moreover, this can be achieved by using the tips 1A, 1B, 1C, and 1D that are the same as one another.

The number of the tips 1 arranged is not necessarily four, and three or more than five tips 1 may be arranged.

Furthermore, in accordance with the arrangement of the main tip 1A in relation to the third tip 1C, since the first long cutting edge 8 located at the base end side of the main tip 1A is gradually inclined to the distal end from the outer periphery of the tool body 21 toward the rotation axis O, and the second short cutting edge 7 of the third tip 1C is inclined to the base end from the outer periphery toward the rotation axis O, the thickness of an outer peripheral portion 27 between the tips 1A and 1C can be increased from the outer periphery toward the inside. Therefore, the strength of the tool body 21 can be secured together with the strength of a center portion 26 of the distal end thereof.

In Figs. 5 to 7, one or both of the third tip 1C and the fourth tip 1D may be arranged in the lateral direction, and the first short cutting edge 6 and/or the second short cutting edge 7 may be defined as outer peripheral edges. Alternatively, the third tip 1C and the fourth tip 1D may be turned upside down and arranged in the vertical direction, and the first long cutting edge 8 and the second long cutting edge 9 may be defined as outer peripheral cutting edges. In short, the tips may be arranged either in the vertical direction or in the lateral direction as long as they can be arranged so that the rotation paths of the outer peripheral cutting edges overlap.

Another example of the throwaway tip of the present invention will now be described as a third embodiment. The same or similar portions to those of the throwaway tip 1 according to the first embodiment will be described using the same reference numerals.

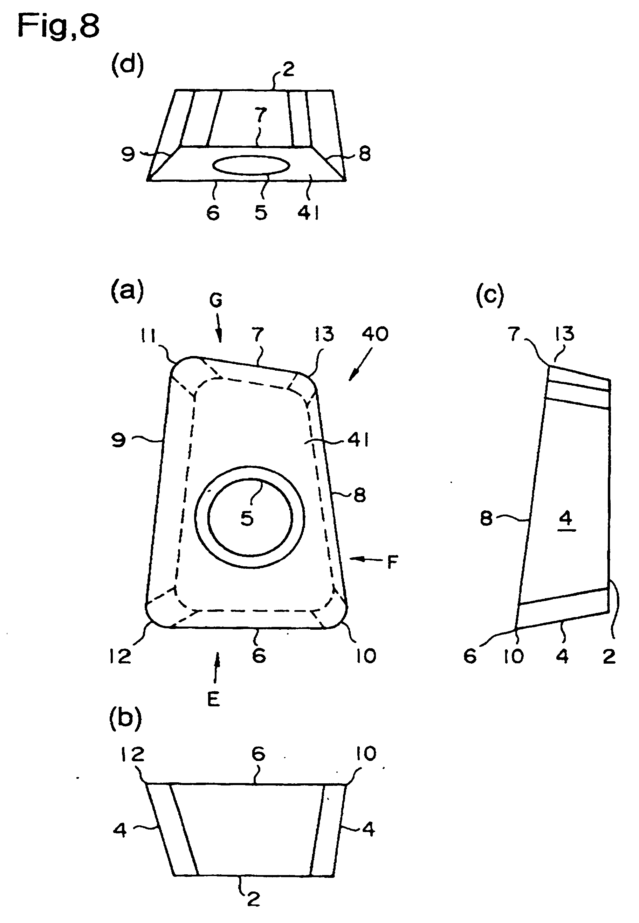

Fig. 8(a) is a plan view of a throwaway tip according to this embodiment, Fig. 8(b) is a side view of the throwaway tip shown in Fig. 8(a), as seen from the direction E, Fig. 8(c) is a side view of the same, as seen from the direction F, and Fig. 8(d) is a side view of the same, as seen from the direction G.

A throwaway tip (hereinafter, it may be referred to as tip) 40 shown in Fig. 8 according to the third embodiment is formed in substantially the shape of a rectangular plate, an upper surface 41 which opposes a lower surface 2 defining a seating surface is formed in a planar shape which is inclined from a first short cutting edge 6 toward an opposing second short cutting edge 7 so that the distance between the upper surface 41 and the lower surface 2 is gradually shortened, and therefore, a first long cutting edge 8 and a second long cutting edge 9 are straight-lined cutting edges inclined from the first short cutting edge 6 toward the second short cutting edge 7. Therefore, the distance between the first short cutting edge 7 and the lower surface 2 is formed shortest.

An insertion hole 5 passing through the upper and lower surfaces 41 and 2 is formed in a direction to intersect nearly perpendicularly to the lower surface 2. Alternatively, the insertion hole 5 may be made to intersect perpendicularly to the upper surface 41.

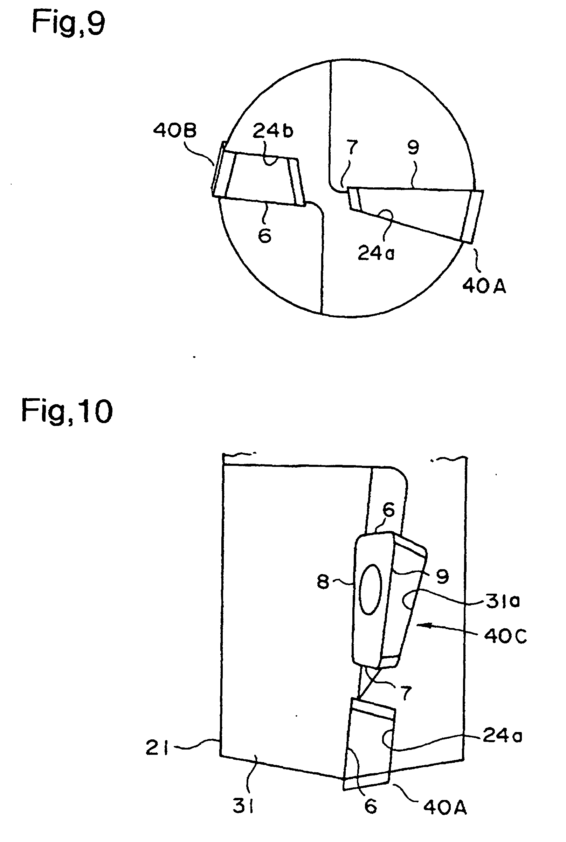

In mounting such a tip 40 to the above-described end mill 30 (20) instead of the tip 1, if the tip 40 is mounted so that an radial rake angle or an axial rake angle of each cutting edge is not changed, the thickness of tip-mounting seats 24a, 24b, 31a, and 32a formed on the back of the tip can be increased and the strength of a tool body 21 can be increased. In a main tip 40A shown in Fig. 9 and a third tip 40C shown in Fig. 10, the thickness of the tip-mounting seats 24a and 31a on the side of the second short cutting edge 7 can be increased.

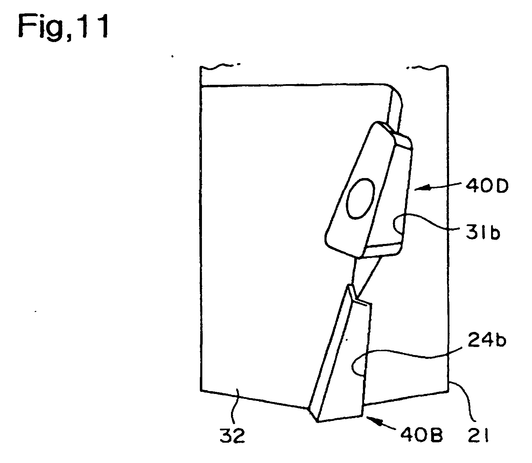

When the tip 40 or 1 is mounted to the tip-mounting seat without changing the posture of the seating surface (lower surface 2), in a sub-tip 40B and a fourth tip 40D in which a first short cutting edge 6 is located at the distal end, as shown in Fig. 11, an axial rake angle of a first long cutting edge 8 serving as an outer peripheral cutting edge can be increased, and the cutting quality in the outer peripheral cutting can be improved.

In mounting the tip 1 according to the first embodiment and the tip 40 according to the third embodiment to an end mill, the arrangement of the tips 1 and 40 is not limited to one form in which the main tips 1A and 40A are arranged in the lateral direction at the distal end of the tool body 21 and the sub-tips 1B and 40B are arranged in the vertical direction, as shown in the end mill 20 and 30 of the first and second embodiments, and other suitable arrangement forms may be adopted.

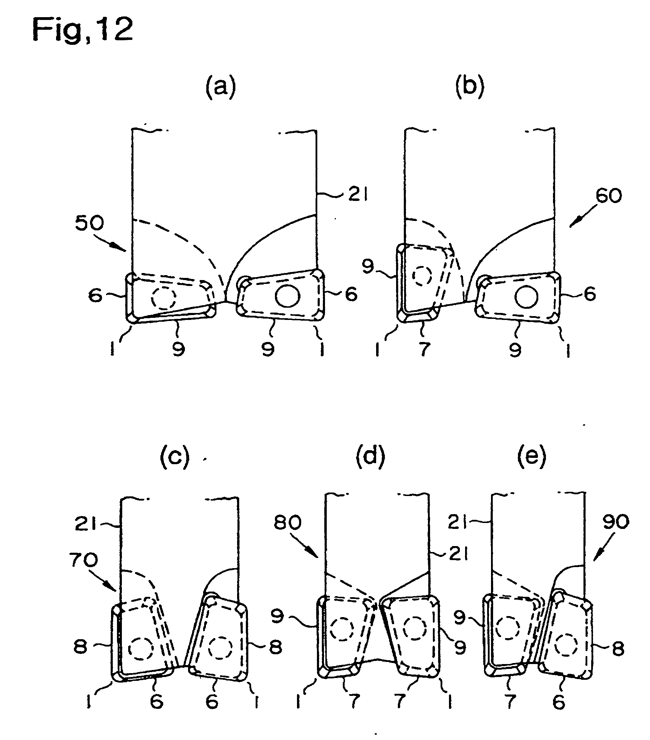

For example, in Fig. 12(a), if two tips 1 and 1 (40 and 40) are arranged in the lateral direction to define first short cutting edges 6 and 6 as outer peripheral cutting edges and define second long cutting edges 9 and 9 as front cutting edges, this arrangement form can be adopted to a tool body 21 having a large outer diameter. An end mill 50 can be applied to a large-diameter-hole drilling operation.

In an end mill 60 shown in Fig. 12(b), one tip 1 is arranged in the lateral direction to define a first short cutting edge 6 as an outer peripheral cutting edge and define a second long cutting edge 9 as a front cutting edge overlapping the rotation axis O, and the other tip is arranged in the vertical direction to define a second short cutting edge 7 as a front cutting edge and define a second long cutting edge 9 as an outer peripheral cutting edge.

In an end mill 70 shown in Fig. 12(c), two tips 1 and 1 (40 and 40) are arranged in the vertical direction to define each first short cutting edge 6 as a front cutting edge and define each first long cutting edge 8 as an outer peripheral cutting edge.

In an end mill 80 shown in Fig. 12(d), two tips 1 and 1 (40 and 40) are arranged in the vertical direction to define each second short cutting edge 7 as a front cutting edge and define each second long cutting edge 9 as an outer peripheral cutting edge.

In an end mill 90 shown in Fig. 12(e), both two tips 1 and 1 (40 and 40) are arranged in the vertical direction to define a first short cutting edge 6 of one tip 1 as a front cutting edge, define a first long cutting edge 8 as an outer peripheral cutting edge, define a second short cutting edge 7 of the other tip 1 as a front cutting edge, and define a second long cutting edge 9 as an outer peripheral cutting edge.

In this case, in the end mills 50, 70, 80, and 90, a portion left uncut (a core remainder) is produced between the two tips 1 and 1 during cutting, but the portion can be picked up by the end mills if the thickness of the core remainder of a material to be cut is small. If the end mills are fed in the lateral direction, the portion left uncut can be cut off. Since the second long cutting edge 9 of one tip 40 overlaps the rotation axis O in the end mill 60, no core remainder is produced.

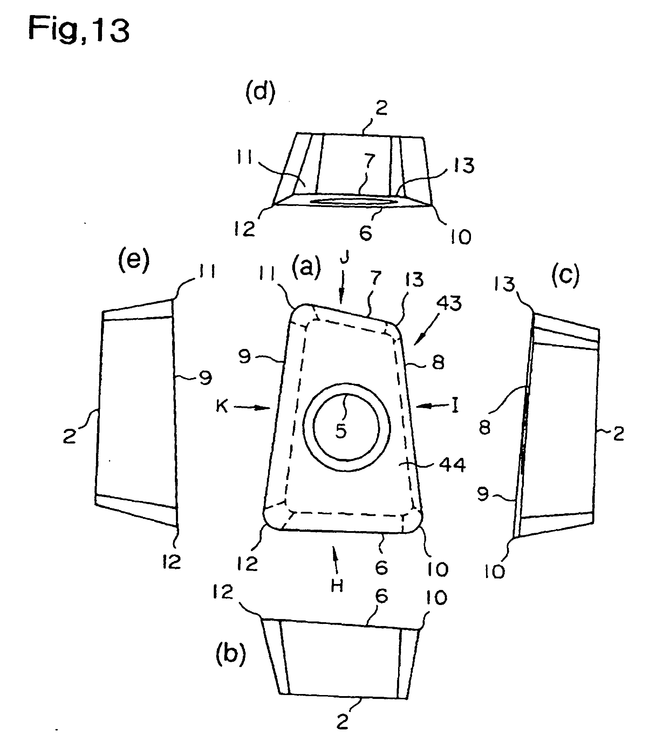

A throwaway tip may have a construction shown in Fig. 13 as a modification of the tip 40 according to the third embodiment. Fig. 13(a) is a plan view of a throwaway tip according to this modification, Fig. 13(b) is a side view of the throwaway tip shown in Fig. 13(a), as seen from the direction H, Fig. 13 (c) is a side view of the same, as seen from the direction I, Fig. 13 (d) is a side view of the same, as viewed from the direction J, and Fig. 13 (e) is a side view of the same, as viewed from the direction K.

A throwaway tip 43 according to a modification shown in Fig. 13 is formed in substantially the shape of a rectangular plate, an upper surface 44 which opposes a lower surface 2 defining a seating surface is formed into a twisted surface, and therefore, a first short cutting edge 9, a second short cutting edge 7, a first long cutting edge 8, and a second long cutting edge 9 are linear-shaped cutting edges inclined at an arbitrary angle so that the distance between the lower surface 2 and these cutting edges gradually changes from one end of each of the corner cutting edges toward the other end.

An insertion hole 5 passing through the upper and lower surfaces 44 and 2 is formed in a direction to intersect nearly perpendicularly to the lower surface 2. The insertion hole may be made to intersect perpendicularly to the upper surface 44.

The adoption of such a construction can set a suitable radial rake angle and an axial rake angle according to the mounting position or the posture of each cutting edge.

Breaker grooves may be formed in the upper surfaces 3, 41, and 44.

The front cutting edges of the two tips 1 and 1 (40 and 40; 43 and 43) may be provided at a position above the center of rotation of the tool body or at a position below the center of rotation of the tool body.

In the tips 1, 40, and 44 of the first and third embodiments, the corner angles of the first and third corner cutting edges 10, 11, and 12 may be either equal or unequal to one another.

While the long cutting edges 8 and 9 and the short cutting edges 6 and 7 in the throwaway tips of the above-described first and third embodiments and the modification are straight-lined cutting edges, they may be instead convexly curved cutting edges or concavely curved cutting edges. In this case, the upper surfaces 41 and 44 may be convex surfaces or concave surfaces.

The throwaway tip according to the present invention may be mounted to various types of cutting tools, such as other types of rolling tools or turning tools without being limited to the end mills 30, 50, 60, 70, 80, and 90.

### Advantages

As described above, in the throwaway tip according to the present invention, a corner angle of two adjacent corner cutting edges of one side in one surface is set to 90° or less, and two opposing ridges on one side including these corner cutting edges are defined as cutting edges which are not parallel to each other. Therefore, when a plurality of the same throwaway tips are used and provided at the distal end of the tool body so that two corner cutting edges on one side are located at the outer periphery of the distal end, front cutting edges, outer peripheral cutting edges, and outer-peripheral-side corner cutting edges can be arranged as two cutting edges. These cutting edges are difficult to chip and cutting efficiency is high, the tips can be easily stored and are low in the running costs.

Since a corner angle of one of corner cutting edges on the other side of the one surface is set to 90° or less, when the tip is mounted to the tool body, the thickness of the tool body at a peripheral portion of the tip can be ensured and the strength is high.

Two ridges on the other side in the one surface may be defined as cutting edges (6 and 7) which are not parallel to each other.

In this case, the thickness of the tool body at a peripheral portion of the tip can be secured and the strength is improved.

The two pairs of opposing cutting edges (6, 7, 8, and 9) which are not parallel to each other are inclined so that the distance between each of the cutting edges and a seating surface (2) opposing the one surface gradually changes from one end toward the other end. Therefore, the thickness of the back of the tip-mounting seat of the tool body can be increased according to the mounting posture of the tip to the tool body, and the strength can be improved, or a large radial rake angle and a large axial rake angle of each cutting edge can be set, and the cutting quality can be improved. In addition, a suitable radial rake angle and an axial rake angle can be set according to the mounting position or the posture of each cutting edge.

In the throwaway-type cutting tool according to the present invention, a plurality of throwaway tips are the same as one another according to any one of Claims 1 to 4, and two adjacent corner cutting edges on one side in each of the plurality of throwaway tips are arranged to project toward the outer periphery of the distal end of the tool body. Therefore, in performing a drilling operation or the like, cutting can be started from the outer-peripheral-side corner cutting edges and chipping can be restricted, and in performing a shoulder-cutting operation or a groove-processing operation, a finishing operation can be performed by the corner cutting edges at the outer periphery of the distal end while performing the shoulder-cutting operation by the outer peripheral cutting edges.

In the throwaway tip having one of the corner cutting edges projected toward the outer periphery of the distal end of the tool body, a cutting edge extending from the corner cutting edge inward in a radial direction of the tool body is defined as a front cutting edge to extend to the rotation axis of the tool body. Therefore, in performing a drilling operation, cutting can be securely performed without producing a core remainder.

Two cutting edges on one side of the throwaway tip which are not parallel to each other are defined as long cutting edges, two cutting edges on the other side which are not parallel to each other are defined as short cutting edges, a long cutting edge in one of the plurality of throwaway tips projecting toward the distal end of the tool body is defined as a front cutting edge and a short cutting edge is defined as an outer peripheral cutting edge, a short cutting edge in the other one of throwaway tips is defined as a front cutting edge and a long cutting edge is defined as an outer peripheral cutting edge, and these cutting edges are provided at the distal end of the tool body. Therefore, when a plurality of the same tips are used, corner cutting edges on the outer periphery of the distal end of the tips can be arranged as two cutting edges by being projected toward the distal end, and the corner cutting edges are difficult to chip and cutting efficiency is high. If the same tips are further arranged on the base end side of the tool body, rotation paths of the outer peripheral cutting edges can be overlapped and the tips can be easily stored.

The same throwaway tips defining long cutting edges as outer peripheral cutting edges are provided on the tool body at the distal end of one throwaway tip so that rotation paths of outer peripheral cutting edges overlap when the tool body is rotated around the rotation axis. Therefore, the rotation paths of the outer peripheral cutting edges can be overlapped by sequentially overlapping the same tips from the distal end toward the base end of the tool body, and this can be adopted to a deep hole processing.

### Reference Numerals

- 1, 40, 43: throwaway tip
- 1A, 40A: main tip
- 1B, 40B: sub-tip
- 1C, 40C: third tip
- 1D, 40D: fourth tip
- 6: first short cutting edge
- 7: second short cutting edge
- 8: first long cutting edge
- 9: second long cutting edge
- 10: first corner cutting edge
- 11: second corner cutting edge
- 12: third corner cutting edge
- 13: fourth corner cutting edge
- 20,: 30 end mill
- 21: tool body

## Claims

1. A throwaway tip (1, 40) formed in substantially the shape of a rectangular plate in which a corner angle of two adjacent corner cutting edges (10, 12) of one side in one surface (3) is set to 90° or less, and two opposing ridges on one side including these corner cutting edges are defined as cutting edges (8, 9) which are not parallel to each other, **characterised in that** all side faces between an upper face (3) acting as a rake face and a seating face (2) have a positive flank angle which is less than 90° against the rake face.

2. A throwaway tip according to Claim 1, wherein a corner angle of one of the two corner cutting edges on the other side of said one surface is set to 90° or less.

3. A throwaway tip according to Claim 1 or 2, wherein two ridges on the other side in said one surface are defined as cutting edges which are not parallel to each other.

4. A throwaway tip according to Claim 3, wherein said two pairs of opposing cutting edges which are not parallel to each other are inclined so that the distance between each of the cutting edges and a seating surface opposing said one surface gradually changes from one end toward the other end.

5. A throwaway-type cutting tool comprising a plurality of throwaway tips mounted to the distal end of a tool body, and each throwaway tip having a cutting edge arranged to project toward the distal end,
wherein said plurality of throwaway tips are the same as one another according to any one of Claims 1 to 4, and said two adjacent corner cutting edges on one side in each of said plurality of throwaway tips are arranged to project toward the outer periphery of the distal end of the tool body.

6. A throwaway-type cutting tool according to Claim 5, wherein, in a throwaway tip having one of said corner cutting edges projected toward the outer periphery of the distal end of the tool body, a cutting edge extending from said corner cutting edge inward in a radial direction of the tool body is defined as a front cutting edge to extend to the rotation axis of the tool body.

7. A throwaway-type cutting tool according to Claim 5, wherein two cutting edges on one side of said throwaway tip which are not parallel to each other are defined as long cutting edges, two cutting edges on the other side which are not parallel to each other are defined as short cutting edges, a long cutting edge in one of said plurality of throwaway tips projecting toward the distal end of the tool body is defined as a front cutting edge and a short cutting edge is defined as an outer peripheral cutting edge, a short cutting edge in the other one of throwaway tips is defined as a front cutting edge and a long cutting edge is defined as an outer peripheral cutting edge, and these cutting edges are provided at the distal end of the tool body.

8. A throwaway-type cutting tool according to Claim 7, wherein the same throwaway tips defining long cutting edges as outer peripheral cutting edges are provided on the tool body at the distal end of said one throwaway tip so that rotation paths of outer peripheral cutting edges overlap when the tool body is rotated around the rotation axis.

## Patentansprüche

1. Wendeschneidplatte (1, 40), die im Wesentlichen in der Form einer rechteckigen Platte ausgeformt ist, in der ein Eckwinkel zweier benachbarter Eck-Schneidkanten (10, 12) an einer Seite in einer Oberfläche (3) bei 90° oder weniger eingestellt ist und zwei gegenüberliegende Grate an einer Seite inklusive dieser Eck-Schneidkanten als Schneidkanten (8, 9) definiert sind, die nicht parallel zueinander stehen, **dadurch gekennzeichnet, dass** alle Seitenflächen zwischen einer oberen Fläche (3) als Spanwinkel-Fläche und als AnlageFläche (2) mit einem positiven Flankenwinkel, der weniger als 90° gegen die Spanwinkel-Fläche beträgt, agieren.

2. Wendeschneidplatte gemäß Anspruch 1, wobei ein Eckwinkel einer der zwei Eck-Schneidkanten an der anderen Seite der einen Oberfläche bei 90° oder weniger eingestellt ist.

3. Wendeschneidplatte gemäß Anspruch 1 oder 2, wobei zwei Grate an der anderen Seite in der einen Oberfläche als Schneidkanten, die nicht parallel zueinander stehen, definiert sind.

4. Wendeschneidplatte gemäß Anspruch 3, wobei die zwei Paare von gegenüberstehenden Schneidkanten, die nicht parallel zueinander stehen, derart geneigt sind, dass der Abstand zwischen jeder der Schneidkanten und einer Anlage-Oberfläche gegenüber der einen Oberfläche sich von einem Ende auf das andere Ende hin fortschreitend ändert.

5. Schneidwerkzeug des Wendeschneidplatten-Typs, umfassend eine Vielzahl von Wendeschneidplatten, die an dem distalen Ende eines Werkzeugkörpers befestigt sind, und bei dem jede Wendeschneidplatte eine Schneidkante aufweist, die so angeordnet ist, dass sie auf das distale Ende hin hervorsteht,
wobei die Vielzahl von Wendeschneidplatten die gleichen wie in einem der Ansprüche 1 bis 4 beschrieben sind und die zwei benachbarten Eck-Schneidkanten an der einen Seite in jeder der Vielzahl von Wendeschneidplatten so angeordnet sind, dass sie auf den äußeren Umfang des distalen Endes des Werkzeugkörpers hervorstehen.

6. Schneidwerkzeug des Wendeschneidplatten-Typs gemäß Anspruch 5, wobei in einer Wendeschneidplatte, die eine der Eck-Schneidkanten aufweist, die auf den äußeren Umfang des distalen Endes des Werkzeugkörpers hin hervorstehen, eine Schneidkante von der Eck-Schneidkante in einer radialen Richtung des Werkzeugkörpers sich nach innen erstreckt, als vordere Schneidkante definiert ist, um sich zur Rotationsachse des Werkzeugkörpers hin zu erstrecken.

7. Schneidwerkzeug des Wendeschneidplatten-Typs gemäß Anspruch 5, wobei zwei Schneidkanten an der einen Seite der Wendeschneidplatte, die nicht parallel zueinander stehen, als lange Schneidkanten definiert sind, zwei Schneidkanten an der anderen Seite, die nicht parallel zueinander stehen, als kurze Schneidkanten definiert sind, eine lange Schneidkante, die in einer der Vielzahl von Wendeschneidplatten auf das distale Ende des Werkzeugkörpers hin hervorsteht, als vordere Schneidkante definiert ist und eine kurze Schneidkante als äußere umfängliche Schneidkante definiert ist, eine kurze Schneidkante in der anderen Wendeschneidplatte als vordere Schneidkante definiert ist und eine lange Schneidkante als eine äußere umfängliche Schneidkante definiert ist, und diese Schneidkanten am distalen Ende des Werkzeugkörpers vorgesehen sind.

8. Schneidwerkzeug des Wendeschneidplatten-Typs gemäß Anspruch 7, wobei die gleichen Wendeschneidplatten, die lange Schneidkanten als äußere umfängliche Schneidkanten definieren, an dem Werkzeugkörper am distalen Ende der Wendeschneidplatte derart vorgesehen sind, dass die Rotationswege der äußeren umfänglichen Schneidkanten sich überlappen, wenn der Werkzeugkörper um die Rotationsachse gedreht wird.

## Revendications

1. Plaquette amovible (1, 40) formée sensiblement sous la forme d'une plaque rectangulaire dans laquelle un angle de coin de deux arêtes tranchantes de coins adjacents (10, 12) d'un côté dans une surface (3) est établi à 90° ou moins, et de nervures opposées sur un côté incluant ces arêtes tranchantes de coins sont définies comme arêtes tranchantes (8, 9) qui ne sont pas parallèles l'une à l'autre, **caractérisée en ce que** toutes les faces latérales entre une face supérieure (3) agissant comme face de coupe inclinée et une face d'appui (2) présentent un angle de dépouille positif qui est inférieur à 90° par rapport à la face de coupe inclinée.

2. Plaquette amovible selon la revendication 1, dans laquelle un angle des coins d'une des deux arêtes tranchantes de coins sur l'autre côté de ladite surface est établi à 90° ou moins.

3. Plaquette amovible selon la revendication 1 ou 2, dans laquelle deux nervures sur l'autre côté dans ladite une surface sont définies comme arêtes tranchantes qui ne sont pas parallèles l'une à l'autre.

4. Plaquette amovible selon la revendication 3, dans laquelle lesdites deux paires des arêtes tranchantes opposées qui ne sont pas parallèles l'une à l'autre sont inclinées de sorte que la distance entre chacune des arêtes tranchantes et une surface d'appui opposée à ladite une surface change progressivement depuis une extrémité vers l'autre extrémité.

5. Outil de coupe du type amovible comprenant une pluralité de plaquettes amovibles montées à l'extrémité distale du corps d'outil, et chaque plaquette amovible ayant une arête tranchante disposée pour dépasser vers l'extrémité distale,
dans lequel, ladite pluralité des plaquettes amovibles sont identiques les unes aux autres selon l'une quelconque des revendications 1 à 4, et
lesdites deux arêtes tranchantes de coins adjacents sur un côté dans chacune de ladite pluralité des plaquettes amovible sont disposées pour dépasser vers la périphérie externe de l'extrémité distale du corps d'outil.

6. Outil de coupe du type amovible selon la revendication 5, dans lequel dans une plaquette amovible ayant une des arêtes tranchantes de coin qui dépasse vers la périphérie externe de l'extrémité distale du corps d'outil, une arête tranchante s'étendant depuis ladite arête tranchante de coin à l'intérieur dans une direction radiale du corps d'outil est définie comme arête tranchante avant pour s'étendre vers l'axe de rotation du corps d'outil.

7. Outil de coupe du type amovible selon la revendication 5, dans lequel deux arêtes tranchantes sur un côté de ladite plaquette amovible qui ne sont pas parallèles l'une à l'autre sont définies comme arêtes tranchantes longues, deux arêtes tranchantes sur l'autre côté qui ne sont pas parallèles l'une à l'autre sont définies comme arêtes tranchantes courtes, une arête tranchante longue dans une de ladite pluralité des plaquettes amovibles dépassant vers l'extrémité distale du corps d'outil est définie comme arête tranchante avant et une arête tranchante courte est définie comme arête tranchante périphérique externe, une arête tranchante courte dans l'autre plaquette des plaquettes amovibles est définie comme arête tranchante avant et une arête tranchante longue est définie comme arête tranchante périphérique externe, et ces arêtes tranchantes sont disposées à l'extrémité distale du corps d'outil.

8. Outil de coupe du type amovible selon la revendication 7, dans lequel les mêmes plaquettes amovibles définissant les arêtes tranchantes longues comme arêtes tranchantes périphériques externes sont disposées sur le corps d'outil à l'extrémité distale de ladite plaquette amovible de sorte que les trajets de rotation des arêtes tranchantes périphériques externes se recouvrent lorsque le corps d'outil est mis en rotation autour de l'axe de rotation.
